# FASCICULE DE BREVET EUROPEEN

(11) **EP 3 994 706 B1**
(45) Date de publication et mention de la délivrance du brevet: **21.06.2023**
(21) Numéro de dépôt: 20746255.7
(22) Date de dépôt: 30.06.2020
(51) Int. Cl.: G21C 17/013, G21C 19/26

(54) **OUTIL DE RÉCUPÉRATION D'UN ÉLÉMENT SOLIDE, NOTAMMENT UN MATÉRIAU RADIOACTIF, COMPRENANT UNE TÊTE DE CAPTURE ET UN GODET**
RÜCKGEWINNUNGSWERKZEUG ZUR RÜCKGEWINNUNG EINES FESTEN ELEMENTS, INSBESONDERE EINES RADIOAKTIVEN MATERIALS, MIT EINEM EINFANGKOPF UND EINEM BECHER
RECOVERY TOOL FOR RECOVERING A SOLID ELEMENT, IN PARTICULAR A RADIOACTIVE MATERIAL, COMPRISING A CAPTURE HEAD AND A CUP

(30) Priorité: 03.07.2019 FR 1907380
(43) Date de publication de la demande: 11.05.2022
(73) Titulaire: ORANO DS - Démantèlement et Services, 91196 Gif-Sur-Yvette (FR)
(72) Inventeur: ESCOFFIER, Cédric, 30200 BAGNOLS-SUR-CEZE (FR); CATSIVELAS, François, 84150 VIOLES (FR); BOUZAT, Sébastien, 30340 SAINT PRIVAT DES VIEUX (FR)
(74) Mandataire: Brevalex
(86) Numéro de dépôt international: PCT/FR2020/051142
(87) Numéro de publication internationale: WO 2021/001624

(56) Documents cités:
- CN-U- 207 566 817
- JP-A- 2014 235 009
- JP-A- 2019 011 988

## Description

### DOMAINE TECHNIQUE

L'invention concerne un outil de récupération d'un élément solide non directement accessible à l'homme, difficilement préhensible par des moyens conventionnels de préhension et permettant d'en assurer « l'imperdabilité » après récupération. Il est notamment applicable à des éléments solides denses et/ou radioactifs, tels qu'un fragment de corium.

### ÉTAT DE LA TECHNIQUE ANTÉRIEURE

Dans le cadre de projets de type exploitation, démantèlement ou assainissement en milieu nucléaire, il peut être nécessaire de capturer et d'isoler radiologiquement des éléments ou matériaux hautement radioactifs, de taille, de densité et de masse variables, tels que des fragments de corium.

La capture de ces éléments solides ou matériaux radioactifs est susceptible d'être effectuée dans des zones inaccessibles ou difficilement accessibles à un être humain, tout en recherchant à limiter l'exposition d'un opérateur humain aux radiations, la masse et l'encombrement de l'outil de récupération. La capture et l'isolement d'éléments solides ou matériaux radioactifs sont difficiles à mettre en oeuvre au vu de ces contraintes.

Compte tenu de la géométrie ou de l'état de surface de l'élément solide, il est difficilement préhensible au moyen d'outils de l'art antérieur tels que des pinces ou des ventouses. Par ailleurs, une fois capturé, l'élément solide ne doit pas chuter ou être perdu lors des opérations ultérieures, telles que le transport vers un dispositif de mesure ou d'analyse.

JP 2019-11988 et JP 2014-235009 ont trait à la récupération de matériau radioactif. CN 207566817 porte sur un panier pour permettre de travailler en altitude sur un immeuble.

### EXPOSÉ DE L'INVENTION

L'invention vise à résoudre au moins partiellement les problèmes rencontrés dans les solutions de l'art antérieur.

A cet égard, l'invention a pour objet un outil de récupération d'un élément solide, notamment un matériau radioactif. L'outil de récupération comprend un châssis, une tête de capture et au moins un godet.

La tête de capture est mobile par rapport au châssis entre une position rentrée et une position déployée pour capturer l'élément solide. En position rentrée, la tête de capture est logée à l'intérieur d'une enceinte de l'outil de récupération.

Le godet est mobile par rapport au châssis entre une position d'ouverture et une position de fermeture. En position d'ouverture, la tête de capture est déployée. En position déployée de la tête de capture, le godet est en position d'ouverture.

En position de fermeture, la tête de capture est en position rentrée pour retenir l'élément solide à l'intérieur de l'enceinte. En position rentrée de la tête de capture, le godet est en position de fermeture.

La tête de capture comprend un coussin gonflable par un fluide. La tête de capture est configurée pour retenir l'élément solide relativement au châssis au moins partiellement par aspiration en vidant du fluide dans le coussin gonflable, notamment lorsque la tête de capture est en position déployée.

Grâce à l'outil de récupération selon l'invention, il est possible de capturer un élément solide, notamment un matériau radioactif tel qu'un fragment de corium, de retenir l'élément solide à l'intérieur de l'outil de récupération, tout en protégeant un opérateur contre les radiations. La dépression créée dans la tête de capture permet de capturer plus efficacement l'élément solide. L'outil de récupération est relativement peu lourd et peu encombrant. Il est décontaminable, fiable et facile d'utilisation. Il peut être commandé à distance, notamment par télé opération.

La tête de capture est apte à capturer plus efficacement l'élément solide du fait du coussin. Le coussin est déformable pour capturer l'élément solide en s'adaptant à sa forme sans l'abîmer. Le coussin gonflable permet de capturer encore plus efficacement l'élément solide par aspiration d'au moins une partie du fluide dans le coussin gonflable.

L'invention peut comporter de manière facultative une ou plusieurs des caractéristiques suivantes combinées entre elles ou non.

En particulier, l'enceinte est fermée au moins partiellement par le godet en position de fermeture. Le coussin est notamment situé à l'extérieur du châssis lorsque la tête de capture est en position déployée.

De préférence, le coussin est réalisé dans un matériau comprenant un élastomère tel qu'un silicone ou un latex.

De préférence, la tête de capture comprend un filtre pour le fluide.

De préférence, le fluide est de l'air.

Selon une particularité de réalisation, la tête de capture est raccordée de manière démontable au châssis de l'outil de récupération.

De préférence, la tête de capture est raccordée de manière démontable par rapport au châssis de l'outil de récupération par vissage.

La tête de capture peut être remplacée facilement. L'outil de récupération peut notamment être équipé de têtes de capture interchangeables, par exemple d'une tête de capture particulièrement adaptée à l'élément solide à capturer.

Selon une particularité de réalisation, le godet mobile est un premier godet. L'outil de récupération comprend un deuxième godet qui est mobile entre une position d'ouverture pour le déploiement de la tête de capture, et une position de fermeture dans laquelle la tête de capture est en position rentrée pour retenir l'élément solide à l'intérieur de l'enceinte.

En position d'ouverture de chaque godet, la tête de capture est déployée. En position déployée de la tête de capture, chaque godet est en position d'ouverture.

En position de fermeture de chaque godet, la tête de capture est en position rentrée pour retenir l'élément solide à l'intérieur de l'enceinte. En position rentrée de la tête de capture, chaque godet est en position de fermeture.

De préférence, le deuxième godet est de structure sensiblement identique à celle du premier godet.

Très préférablement, le deuxième godet est configuré pour avoir une position symétrique de la position du premier godet par rapport à un plan de symétrie passant par la tête de capture, lors de l'ouverture et/ou de la fermeture des godets.

Selon une particularité de réalisation, chaque godet est configuré pour rester en position de fermeture lors d'un impact de l'élément solide sur ce godet lorsque la tête de capture est en position rentrée, notamment en cas de chute par perte accidentelle du maintien de l'élément solide par la tête de capture.

Selon une particularité de réalisation, chaque godet est mobile en rotation relativement au châssis entre sa position d'ouverture et sa position de fermeture.

De préférence, chaque godet est mobile en rotation relativement au châssis lorsqu'il est déplacé depuis sa position d'ouverture jusqu'à sa position de fermeture.

Selon une particularité de réalisation, chaque godet est rigidement solidaire d'un bras qui est raccordé de manière mobile à un corps mobile de l'outil de récupération.

Chaque godet tend alors à s'écarter d'autant plus de la tête de capture lorsque la tête de capture se déploie, ce qui facilite la capture de l'élément solide.

Selon une particularité de réalisation, l'outil de récupération comprend un organe élastique de rappel qui est configuré pour solliciter élastiquement la tête de capture vers la position rentrée.

De préférence, l'organe élastique de rappel comprend un ressort de traction.

Très préférablement, le ressort de traction est un ressort hélicoïdal.

L'organe élastique de rappel sollicite la tête de capture vers l'intérieur de l'enceinte pour retenir l'élément solide à l'intérieur de l'outil de récupération, en l'absence de commande extérieure de l'outil de récupération, notamment en cas de défaillance du système de commande de l'outil de récupération. Grâce à l'organe élastique de rappel, la position rentrée de la tête de capture et la position de fermeture de l'au moins un godet constituent une position de sécurité de l'outil de récupération.

De préférence, le châssis comprend une enveloppe, l'outil de récupération comprend un corps mobile qui est distinct de la tête de capture et qui est mobile en translation relativement au châssis.

Selon une particularité de réalisation, le corps mobile comprend un socle et au moins deux pattes chacune en saillie depuis le socle. Chaque patte est configurée pour engager mécaniquement un bras de godet pour déplacer ce godet relativement au châssis.

Chaque godet tend alors à s'écarter d'autant plus de la tête de capture lorsque la tête de capture se déploie, ce qui facilite la capture de l'élément solide.

De préférence, chaque patte est configurée pour engager mécaniquement un bras de godet pour déplacer ce godet relativement au châssis, par l'engagement mécanique d'une crémaillère et d'une roue dentée.

Selon une particularité de réalisation, l'outil de récupération comprend un dispositif de guidage du corps mobile relativement au châssis.

De préférence, l'outil de récupération comprend un dispositif de guidage en translation du corps mobile relativement au châssis.

De préférence, le dispositif de guidage comprend une rainure qui est configurée pour engager mécaniquement un pion qui est logé dans la rainure.

L'outil de récupération comprend un actionneur linéaire pour déplacer la tête de capture relativement au châssis entre la position rentrée et la position déployée.

De préférence, l'actionneur linéaire comprend un vérin.

De préférence, l'actionneur linéaire comprend un actionneur pneumatique.

Du fait de l'actionneur linéaire, le fonctionnement de l'outil de récupération peut être d'autant plus facilement automatisé et l'outil de récupération peut être commandé à distance par un opérateur, pour protéger l'opérateur contre les radiations lorsque l'élément solide est un matériau radioactif.

Selon une particularité de réalisation, l'outil de récupération comprend un gonfleur qui est raccordé fluidiquement à la tête de capture pour la gonfler en la remplissant au moins partiellement de fluide et/ou pour la dégonfler en la vidant au moins partiellement de fluide.

L'invention se rapporte aussi à un appareil de récupération d'un élément solide, comprenant un outil de récupération tel que défini ci-dessus.

Selon une particularité de réalisation, l'appareil de récupération comprend en outre un système de commande de l'outil de récupération et/ou un organe de maintien de l'outil de récupération.

Selon une particularité de réalisation, l'appareil de récupération comprend un dispositif de contrôle de récupération pour contrôler la récupération de l'élément solide par l'outil de récupération.

De préférence, le dispositif de contrôle de récupération comprend un dispositif de capture d'images.

Très préférablement, le dispositif de capture d'images est logé à l'intérieur de l'enceinte au moins lorsque le godet est en position de fermeture.

La capture de l'élément solide, notamment du matériau radioactif, est facilitée par le dispositif de contrôle.

L'invention porte également sur un procédé de récupération d'un élément solide, notamment un matériau radioactif, au moyen d'un outil de récupération tel que défini ci-dessus ou d'un appareil de récupération tel que défini ci-dessus.

Selon l'invention, le procédé de récupération comprend une étape de capture de l'élément solide, qui comprend une dépressurisation de la tête de capture pour retenir l'élément solide relativement à la tête de capture, le déplacement de la tête de capture de sa position déployée vers sa position rentrée, et la fermeture de l'au moins un godet, pour retenir l'élément solide à l'intérieur de l'enceinte de l'outil de récupération.

Grâce au procédé de récupération selon l'invention, il est possible de capturer un élément solide, notamment un matériau radioactif tel qu'un fragment de corium, de retenir l'élément solide à l'intérieur de l'outil de récupération, tout en protégeant un opérateur contre les radiations.

Selon une particularité de réalisation, le procédé de récupération comprend une étape d'ouverture de l'au moins un godet et de déploiement de la tête de capture, notamment en regard de l'élément solide, avant l'étape de capture dudit élément.

De préférence, l'étape d'ouverture de l'au moins un godet et de déploiement de la tête de capture comprend le gonflage de la tête de capture en la remplissant au moins partiellement de fluide.

Selon une particularité de réalisation, l'étape de capture comprend l'appui de la tête de capture sur l'élément solide pour le capturer.

En appuyant la tête de capture sur l'élément solide, sa capture est facilitée.

De préférence, l'étape de capture comprend la dépressurisation de la tête de capture en la vidant au moins partiellement de fluide.

### BRÈVE DESCRIPTION DES DESSINS

La présente invention sera mieux comprise à la lecture de la description d'un exemple de réalisation, donné à titre purement indicatif et nullement limitatif, en faisant référence aux dessins annexés sur lesquels :
- la figure 1 est une représentation schématique partiellement en perspective d'un appareil de récupération d'un élément solide, en l'occurrence ici un matériau radioactif;
- la figure 2 est une représentation schématique en coupe longitudinale d'un outil de récupération d'un élément solide, en l'occurrence ici de matériau radioactif
- la figure 3 est une représentation schématique partiellement en perspective de l'outil de récupération, dans lequel les godets sont en position de fermeture ;
- la figure 4 est une représentation schématique partiellement en perspective de l'outil de récupération, dans lequel les godets sont en position d'ouverture ;
- les figures 5A, 5B, 5C, 5D illustrent un procédé de récupération d'un élément solide, en l'occurrence ici d'un matériau radioactif au moyen de l'outil de récupération.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

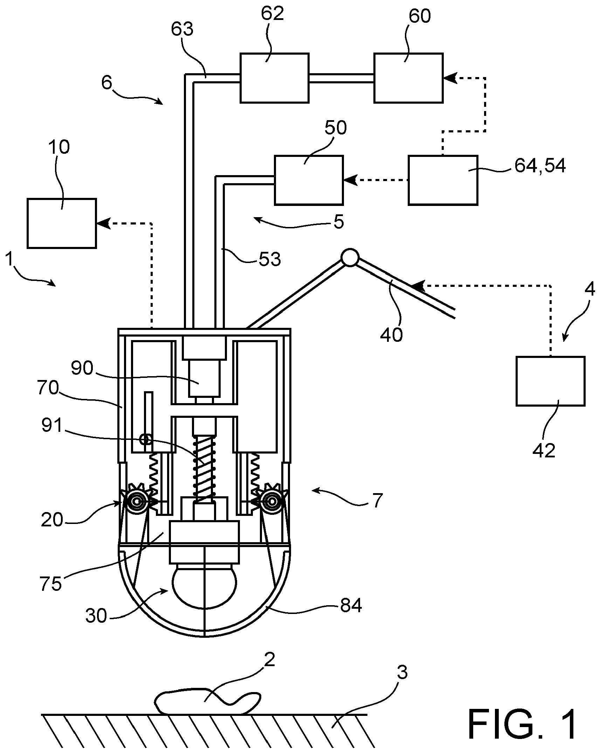

La figure 1 représente un appareil de récupération 1 d'un élément solide 2, selon un premier mode de réalisation. L'élément solide 2 est potentiellement dense, de dimensions et de masse variables, ce qui le rend d'autant plus difficile à récupérer. Il s'agit par exemple d'un matériau radioactif et en particulier d'un fragment de corium.

Ce matériau radioactif 2 est en appui sur une base 3 qui peut être à l'air libre, dans une enceinte confinée, ou bien immergée. Le matériau radioactif 2 peut être dans un endroit difficile d'accès et/ou particulièrement dangereux pour un opérateur humain.

L'appareil de récupération 1 comprend un outil de récupération 7, un organe de maintien 40 de l'outil de récupération, un système d'actionnement de l'outil de récupération 7, au moins un système de commande 4 et un dispositif de contrôle de récupération 10.

L'organe de maintien 40 comprend un bras articulé dans l'exemple représenté. Il est configuré pour supporter et déplacer l'outil de récupération 7, pour qu'il capture le matériau radioactif 2 et qu'il le transporte avant de l'isoler radiologiquement, par exemple dans un conteneur.

Le système de commande 4 de l'appareil comprend un système de commande 42 de l'organe de maintien 40. Le système de commande 42 de l'organe de maintien comprend par exemple au moins un ordinateur. Il est configuré pour commander à l'organe de maintien 40 de déplacer l'outil de récupération 7 à distance, notamment par télé opération.

L'outil de récupération 7 comprend une tête de capture 30.

Le système d'actionnement de l'outil de récupération 7 comprend un système de déploiement 5 et un système de gonflage 6 de la tête de capture 30.

Le système de déploiement 5 de la tête de capture comporte un organe de pressurisation, un conduit d'actionnement 53 et un système de commande de déploiement 54. Il est configuré pour permettre le déploiement de la tête de capture 30 relativement à un châssis 70 de l'outil de récupération 7, pour capturer le matériau radioactif 2.

L'organe de pressurisation comprend au moins un compresseur 50 dans le mode de réalisation représenté. Le conduit d'actionnement 53 relie fluidiquement l'organe de pressurisation à un actionneur linéaire 90, qui est de type pneumatique dans le mode de réalisation représenté. Le conduit d'actionnement 53 comprend par exemple au moins un tuyau souple. Le conduit d'actionnement 53 sert à alimenter l'actionneur 90 en fluide sous pression.

Le système de commande de déploiement 54 sert à commander le fonctionnement de l'organe de pressurisation. Il comprend par exemple au moins un ordinateur.

Dans le mode de réalisation représenté, le fluide est de l'air. Le système de déploiement 5 et le système de gonflage 6 sont configurés pour injecter de l'air sous pression dans l'outil de récupération 7.

Le système de gonflage 6 de la tête de capture comprend un organe de pompage, un conduit d'alimentation 63 en fluide, un dispositif de contrôle de pression 62 et un système de commande pneumatique 64.

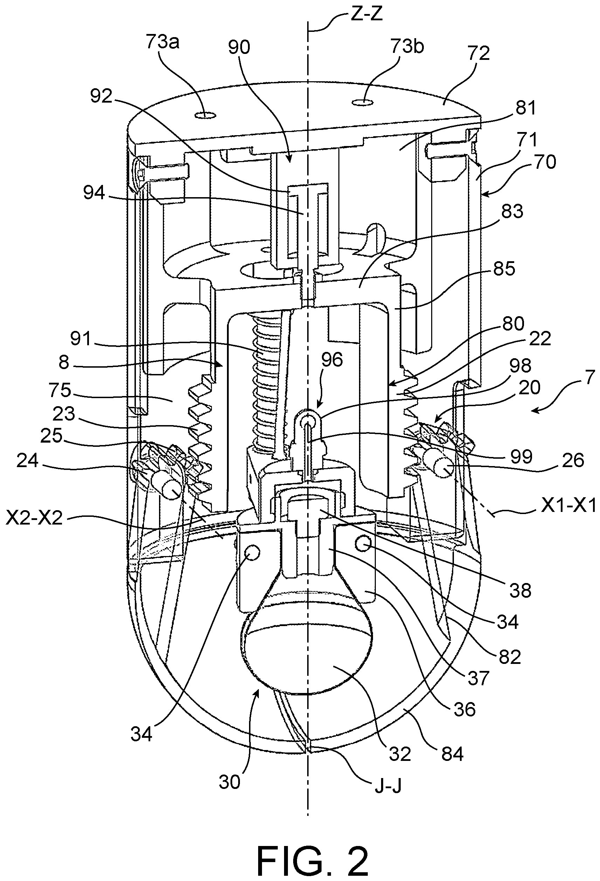

L'organe de pompage comprend au moins une pompe 60, par exemple une pompe de type péristaltique dans le mode de réalisation représenté. Le conduit d'alimentation 63 relie fluidiquement l'organe de pompage à un gonfleur 96 qui est visible à la figure 2 et qui est de type pneumatique dans le mode de réalisation représenté. Le conduit d'alimentation 63 comprend par exemple au moins un tuyau souple. Il sert à alimenter le gonfleur 96 en fluide sous pression ou à dépressuriser le gonfleur 96.

Le dispositif de contrôle de pression 62 comprend au moins un manomètre qui est configuré pour contrôler la pression du fluide injecté par l'organe de pompage vers l'outil de récupération 7.

Le système de commande pneumatique 64 sert à commander le fonctionnement de l'organe de pompage, pour remplir et/ou vider au moins partiellement la tête de capture 30 en fluide. Il comprend par exemple au moins un ordinateur. Le système de commande pneumatique 64 et le système de commande de déploiement 54 forment un seul système de commande fluidique dans le mode de réalisation représenté. Ce système de commande fluidique fait notamment partie du système de commande 4.

Dans le mode de réalisation représenté, l'outil de récupération 7 est réutilisable. Autrement dit, il peut être employé pour récupérer successivement plusieurs matériaux radioactifs 2. Il a une forme d'ogive lorsqu'il est fermé, en présentant une surface externe de révolution autour d'un axe longitudinal Z-Z de l'outil de récupération 7.

En référence conjointe aux figures 1 à 4, l'outil de récupération 7 comprend un châssis 70, un équipage mobile 8, un dispositif de guidage 44, un actionneur linéaire 90, un organe élastique de rappel 91, un gonfleur 96, une tête de capture 30 et le dispositif de contrôle de récupération 10.

La tête de capture 30 est mobile par rapport au châssis 70 entre une position rentrée et une position déployée. Chaque godet 84 de l'équipage mobile 8 est mobile par rapport au châssis 70 entre une position d'ouverture et une position de fermeture. L'outil de récupération 7 a une position fermée dans laquelle la tête de capture 30 est en position rentrée et chaque godet 84 est en position de fermeture, et une position ouverte dans laquelle la tête de capture 30 est en position déployée et chaque godet 84 est en position d'ouverture.

Le châssis 70 de l'outil de récupération 7 comprend une enveloppe 71 et un fond 72.

L'enveloppe 71 est de forme annulaire autour de l'axe longitudinal Z-Z. Elle est ouverte à son extrémité inférieure et à son extrémité supérieure selon l'axe longitudinal Z-Z. Elle est monobloc.

Le fond 72 obture l'extrémité supérieure de l'enveloppe 71 auquel il est fixé, par exemple par vissage. Le fond 72 est traversé par un premier orifice 73a qui est un trou de passage du conduit d'actionnement 53, et par un deuxième orifice 73b qui est un trou de passage du conduit d'alimentation 63.

Le châssis 70 et les godets 84 de l'outil de récupération 7 délimitent une enceinte 75 à l'intérieur de l'outil de récupération 7, pour loger la tête de capture 30 lorsque la tête de capture 30 est en position rentrée.

L'équipage mobile 8 de l'outil de récupération 7 comprend un corps interne mobile 80, deux bras 82, deux godets 84, un dispositif d'entrainement 20 des godets et un dispositif de guidage 44. Il est mobile relativement au châssis 70 pour permettre le déploiement et la rentrée de la tête de capture 30.

Le corps mobile 80 comprend une portion coulissante 81, un socle 83 et au moins deux pattes 85 qui sont chacune en saillie depuis le socle 83 vers la tête de capture 30. Il est notamment monobloc.

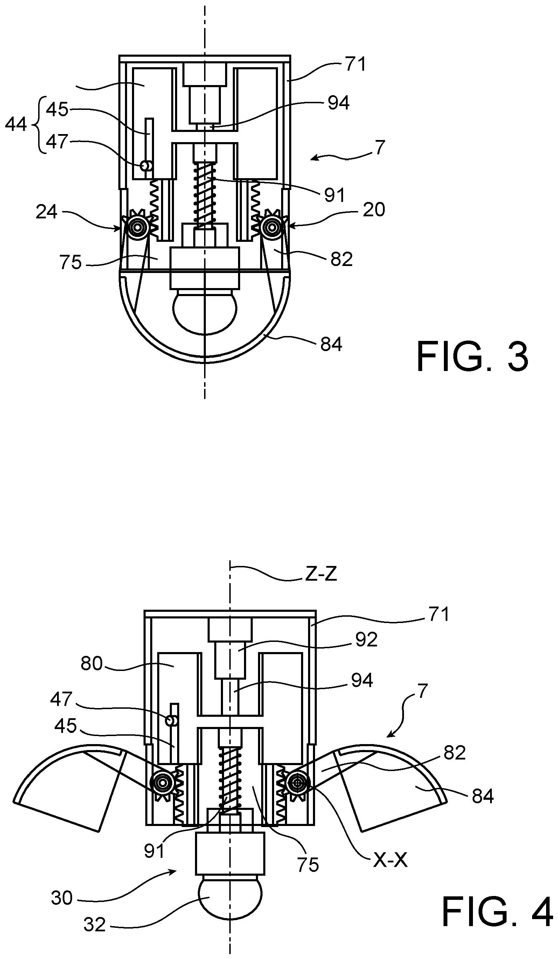

Dans le mode de réalisation représenté, le corps mobile 80 est mobile en translation relativement au châssis 70 selon l'axe longitudinal Z-Z de l'outil de récupération 7 entre une position haute qui est représentée à la figure 3 et une position basse qui est représentée à la figure 4, pour que l'outil de récupération 7 passe de sa position fermée à sa position ouverte et réciproquement. La position haute du corps mobile 80 correspond à la position fermée de l'outil de récupération 7. La position basse du corps mobile 80 correspond à la position ouverte de l'outil de récupération 7.

Plus généralement, le corps mobile 80 est configuré pour être mobile relativement au châssis 70 avec une composante en translation selon la direction d'actionnement Z-Z, pour faire passer l'outil de récupération 7 de sa position fermée à sa position ouverte et réciproquement.

Une direction parallèle à la direction de l'axe longitudinal Z-Z de l'outil de récupération 7 est également appelée direction d'actionnement sauf précisions contraires dans la suite de l'exposé. Une direction circonférentielle est une direction autour de la direction d'actionnement. Une direction transversale est une direction orthogonale à la direction d'actionnement Z-Z.

La portion coulissante 81 s'étend depuis le socle 83 à l'opposé des pattes 85 selon la direction de l'axe longitudinal Z-Z de l'outil de récupération 7. La portion coulissante 81 comprend une paroi qui a une forme annulaire autour de l'axe longitudinal Z-Z. Elle prend appui sur le fond 72 lorsque les godets 84 et la tête de capture 30 sont en position de fermeture. Elle est configurée pour coulisser contre l'enveloppe 71 qui l'entoure, selon la direction d'actionnement Z-Z.

Le socle 83 a une forme de plateau symétrique autour de l'axe longitudinal Z-Z de l'outil de récupération 7. Il est relié mécaniquement d'une part à l'actionneur linéaire 90 et d'autre part à l'organe élastique de rappel 91, qui sont conçus pour le solliciter selon une direction parallèle à l'axe longitudinal Z-Z en sens opposés.

Chaque patte 85 est en saillie depuis le socle selon la direction de l'axe longitudinal Z-Z en direction de la tête de capture 30. Les pattes 85 sont espacées latéralement l'une de l'autre selon une direction transversale de l'outil de récupération 7. Chaque patte 85 comprend une première denture 23. Dans le mode de réalisation représenté, chaque patte 85 comprend une crémaillère 22 à proximité de son extrémité inférieure selon la direction d'actionnement Z-Z, qui porte la première denture 23.

En référence plus spécifiquement aux figures 3 et 4, le dispositif de guidage 44 comprend une rainure 45 et un pion 47 qui est logé dans la rainure 45. Il est configuré pour guider le déplacement du corps mobile 80 relativement au châssis 70. Dans le mode de réalisation représenté, le dispositif de guidage 44 est configuré pour guider le corps mobile 80 en translation relativement au châssis 70.

Le pion 47 est rigidement solidaire de l'enveloppe 71 dont il fait saillie vers l'intérieur du châssis 70, notamment radialement relativement à l'axe longitudinal Z-Z. Le pion 47 est configuré pour engager mécaniquement la rainure 45 et pour se mouvoir dans la rainure 45 lors du passage de l'outil de récupération 7 de sa position fermée à sa position ouverte et réciproquement.

La rainure 45 est réalisée dans la portion coulissante 81. Elle traverse la portion coulissante 81. Elle a une forme longiligne selon la direction de l'axe longitudinal Z-Z.

L'équipage mobile 8 comprend au moins un bras 82 par godet 84. Dans le mode de réalisation représenté, chaque godet 84 est rigidement solidaire d'un seul bras 82. Chaque bras 82 s'étend depuis une extrémité proximale à laquelle il est raccordé au corps mobile 80 jusqu'à une extrémité distale à laquelle il est raccordé à un des godets 84.

Chaque bras 82 est raccordé par une roue dentée 24 à la crémaillère 22 de la patte 85 correspondante du corps mobile 80. Chaque bras 82 est mobile en rotation par rapport à un axe de rotation X1-X1, respectivement X2-X2, qui passe par le centre de la roue dentée 24 relativement au châssis 70. Le bras 82 est également mobile avec une composante en translation selon la direction d'actionnement Z-Z par rapport au corps mobile 80, lorsque l'outil de récupération 7 passe de la position ouverte à la position fermée et réciproquement.

Chaque roue dentée 24 comprend une deuxième denture 25 qui est configurée pour engager mécaniquement la première denture 23 de la crémaillère 22 correspondante, pour déplacer le bras 82 correspondant relativement au corps mobile 80 et relativement au châssis 70.

Les roues dentées 24, les crémaillères 22 et les bras 82 forment conjointement un dispositif d'entrainement 20 de chacun des godets 84 relativement au châssis 70 entre leur position d'ouverture et leur position de fermeture et réciproquement.

L'équipage mobile 8 comprend un premier godet 84 et un deuxième godet 84 qui est de structure sensiblement identique à celle du premier godet 84. Le deuxième godet 84 est configuré pour avoir une position symétrique de la position du premier godet 84 par rapport à un plan de symétrie passant par la tête de capture 30, lors de l'ouverture ou de la fermeture des godets 84. Les godets 84 sont conçus pour obturer l'enceinte 75 en position de fermeture et éventuellement pour retenir le matériau radioactif 2 dans l'enceinte 75, en position de fermeture.

Dans le mode de réalisation représenté, chaque godet 84 est rigidement solidaire d'un des bras 82, en étant formé d'une seule pièce avec le bras 82 correspondant. Chaque godet 84 est une auge ayant une forme générale de quart de sphère.

Chaque godet 84 est mobile en rotation par rapport à un axe de rotation X1-X1, respectivement X2-X2, qui passe par le centre d'une des roues dentées 24 relativement au châssis 70 lorsqu'il est déplacé depuis sa position d'ouverture jusqu'à sa position de fermeture et réciproquement. De manière plus générale, la course de chaque godet 84 relativement au châssis 70 comprend une composante en rotation.

En position d'ouverture, chaque godet 84 est configuré pour permettre le déploiement de la tête de capture 30. Chaque godet 84 est éloigné latéralement de la tête de capture 30 et de l'autre des godets 84, par rapport à la position de fermeture.

En position de fermeture, chaque godet 84 obture l'enceinte 75 et la tête de capture 30 est en position rentrée, pour retenir le matériau radioactif 2 à l'intérieur de l'enceinte 75. Les godets 84 sont alors jointifs le long d'une ligne de jonction J-J qui est sensiblement transversalement au centre de l'outil de récupération 7.

En particulier, chaque godet 84 est configuré pour rester en position de fermeture lors d'une chute du matériau radioactif 2 de la tête de capture 30 sur ce godet 84.

L'actionneur linéaire 90 est un actionneur pneumatique. L'actionneur linéaire 90 comprend un boitier 92 et une tige 94 qui est mobile en translation selon la direction d'actionnement Z-Z relativement au boitier 92. L'actionneur linéaire 90 forme de ce fait un vérin. Dans le mode de réalisation représenté, l'actionneur linéaire 90 est alimenté en air sous pression par le compresseur 50 et il forme un vérin pneumatique.

L'actionneur linéaire 90 est configuré pour déplacer la tête de capture 30 relativement au châssis 70 entre la position rentrée et la position déployée par l'intermédiaire du corps mobile 80 et du dispositif d'entrainement 20.

Le boitier 92 est rigidement solidaire du châssis 70, en étant par exemple fixé au fond 72. Le boitier 92 a une forme annulaire, typiquement cylindrique de section circulaire autour de l'axe longitudinal Z-Z de l'outil de récupération 7 dans l'exemple représenté.

La tige 94 s'étend longitudinalement le long de la direction d'actionnement Z-Z. Elle est reliée mécaniquement à son extrémité inférieure au socle 83 du corps mobile 80 qu'elle sollicite en translation vers le bas selon la direction d'actionnement Z-Z pour déployer la tête de capture 30. Elle forme un piston.

L'organe élastique de rappel 91 comprend un ressort de traction, notamment un ressort hélicoïdal. Il s'étend longitudinalement selon la direction d'actionnement Z-Z depuis le socle 83 du corps mobile 80 jusqu'à la tête de capture 30. L'organe élastique de rappel 91 est configuré pour solliciter élastiquement la tête de capture 30 vers la position rentrée et le corps mobile 80 vers la position haute.

L'organe élastique de rappel 91 est configuré pour solliciter automatiquement la tête de capture 30 vers la position rentrée, en l'absence de commande extérieure de l'outil de récupération 7, c'est-à-dire notamment en l'absence de commande pneumatique du système de commande de déploiement 54 par l'intermédiaire du compresseur 50.

En particulier, il est configuré pour solliciter automatiquement la tête de capture 30 vers l'intérieur de l'enceinte 75 dès que la tête de capture 30 a capturé le matériau radioactif 2, pour isoler le matériau radioactif 2 à l'intérieur de l'enceinte 75.

Il est également configuré pour solliciter automatiquement la tête de capture 30 vers l'intérieur de l'enceinte 75 pour retenir le matériau radioactif 2 à l'intérieur de l'enceinte 75, en cas de défaillance du système de commande 4 une fois que le matériau radioactif 2 a été capturé.

Le gonfleur 96 comprend un embout 98 et un conduit interne de pressurisation et de dépressurisation 99. Le gonfleur 96 est rigidement solidaire de la tête de capture 30, en étant notamment fixé à une embase 36 de la tête de capture. Il est raccordé fluidiquement à la tête de capture 30, pour la gonfler en la remplissant au moins partiellement d'air et/ou pour la dégonfler en la vidant au moins partiellement d'air.

L'embout 98 du gonfleur 96 est raccordé fluidiquement au conduit d'alimentation 63. Il débouche dans le conduit interne 99 qui est situé à l'intérieur du gonfleur 96, en étant sensiblement annulaire autour de la direction d'actionnement Z-Z. Le conduit interne 99 est relié fluidiquement à un canal d'alimentation 37 en air de la tête de capture 30.

En référence conjointe aux figures 2 à 4, la tête de capture 30 comprend un coussin 32, une embase 36, un dispositif de raccordement de la tête de capture et un dispositif de filtration 38. La tête de capture 30 est portée par l'extrémité inférieure de l'organe élastique de rappel 91 relativement au châssis 70.

La tête de capture 30 est mobile en translation selon la direction d'actionnement Z-Z relativement au châssis 70 entre une position haute dans laquelle elle est en position rétractée et une position basse dans laquelle elle est en position déployée. Elle est configurée pour capturer le matériau radioactif 2 et pour le retenir dans l'enceinte 75 jusqu'à ce qu'il soit transporté en dehors de l'outil de récupération 7, par exemple dans un conteneur.

En position rentrée, la tête de capture 30 est logée à l'intérieur de l'enceinte 75 de l'outil de récupération 7. Elle est en position haute relativement au châssis 70 selon la direction d'actionnement Z-Z. Le coussin 32 est partiellement dégonflé.

En position déployée, au moins le coussin 32 de la tête de capture 30 est situé à l'extérieur de l'enveloppe 71. La tête de capture 30 est en position basse relativement au châssis 70 selon la direction d'actionnement Z-Z. Le coussin 32 est au moins partiellement gonflé. La tête de capture 30 est apte à capturer le matériau radioactif 2.

Le coussin 32 est réalisé dans un matériau comprenant un élastomère tel qu'un silicone ou un latex. Le matériau du coussin 32 a des dimensions et une déformabilité qui sont adaptées au matériau radioactif 2 à capturer. Il est suffisamment déformable pour appuyer si nécessaire sur le matériau radioactif 2 sans l'abîmer, tout en étant suffisamment rigide pour retenir le matériau radioactif 2 lors du déplacement de la tête de capture 30.

Dans le mode de réalisation représenté, le coussin 32 est apte à être gonflé et/ou dégonflé par le gonfleur 96. La tête de capture 30 est configurée pour retenir le matériau radioactif 2 au moins partiellement par aspiration relativement au châssis 70, en vidant partiellement la tête de capture 30.

Dans l'exemple représenté, l'embase 36 est de forme de révolution autour de la direction de l'axe longitudinal Z-Z de l'outil de récupération 7. Elle a notamment une forme générale cylindrique de section circulaire. Elle est traversée par un canal d'alimentation 37. Elle est reliée mécaniquement à l'organe élastique de rappel 91 et est reliée fluidiquement au gonfleur 96 fixé à l'embase 36.

Le canal d'alimentation 37 s'étend entre le conduit interne 99 du gonfleur jusqu'à une cavité interne du coussin 32. Le canal d'alimentation 37 débouche dans la cavité interne du coussin 32, pour le gonfler et/ou le dégonfler en le remplissant et/ou le vidant au moins partiellement de fluide.

La tête de capture 30 comprend un dispositif de filtration 38 qui est situé fluidiquement entre le conduit interne 99 du gonfleur et le canal d'alimentation 37 de la tête de capture. Le dispositif de filtration 38 comprend un filtre qui est situé en entrée du canal d'alimentation 37. Le dispositif de filtration 38 sert à filtrer le fluide qui entre et/ou qui sort du coussin 32.

La tête de capture 30 est raccordée de manière démontable au châssis 70, par au moins une attache. Dans le mode de réalisation représentée, l'embase 36 est raccordée par des vis 34 à l'extrémité inférieure de l'organe élastique de rappel 91. Les vis 34 forment un dispositif de raccordement de la tête de capture 30.

Le dispositif de contrôle de récupération 10 comprend un dispositif de capture d'images (non représenté) tel qu'une caméra. Le dispositif de contrôle de récupération 10 est configuré pour contrôler la récupération du matériau radioactif 2 par l'outil de récupération 7, ce qui facilite la capture du matériau radioactif 2.

Le dispositif de capture d'images est logé à l'intérieur de l'enceinte 75, au moins lorsque le godet 84 est en position de fermeture. Dans le mode de réalisation représenté, le dispositif de capture d'image est par exemple fixé à l'embase 36 de la tête de capture.

A la figure 3, l'outil de récupération 7 est en position fermée. La tête de capture 30 est en position rentrée, en étant à l'intérieur de l'enceinte 75. Chacun des godets 84 est en position de fermeture, pour obturer l'extrémité inférieure de l'enceinte 75. La tige 94 de l'actionneur 90 linéaire est en position rétractée. Le corps mobile 80 est en position haute relativement au châssis 70. Le pion 47 est dans une portion inférieure de la rainure 45 selon la direction d'actionnement Z-Z. Chaque roue dentée 24 engage la crémaillère 22 correspondante dans une portion inférieure de la crémaillère 22.

A la figure 4, l'outil de récupération 7 est en position ouverte. La tête de capture 30 est en position déployée, en étant à l'extérieur de l'enceinte 75. Chacun des godets 84 est en position d'ouverture, pour permettre le déploiement de la tête de capture 30, c'est-à-dire la sortie de la tête de capture 30. La tige 94 de l'actionneur 90 linéaire est en position déployée. Le corps mobile 80 est en position basse relativement au châssis 70. Le pion 47 est dans une portion supérieure de la rainure 45 selon la direction d'actionnement Z-Z. Chaque roue dentée 24 engage la crémaillère 22 correspondante dans une portion supérieure de la crémaillère 22.

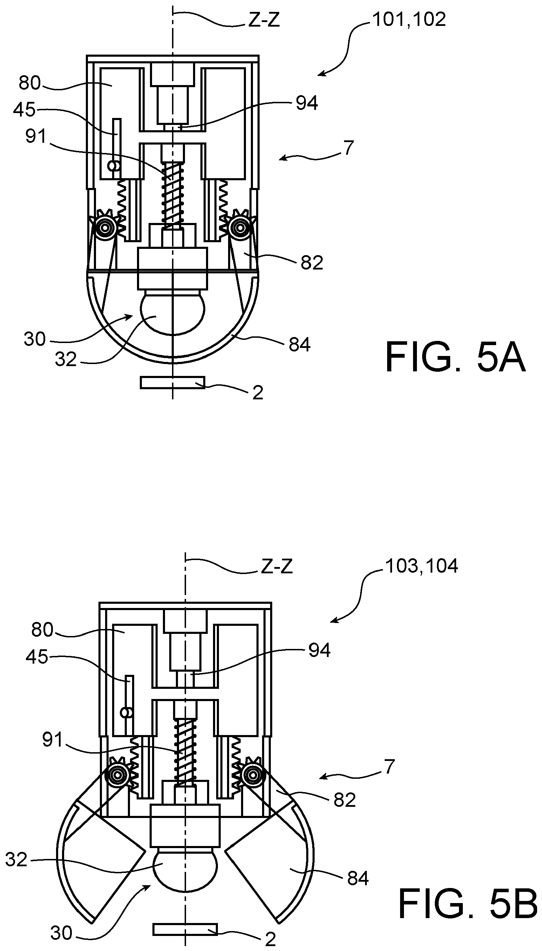

Le procédé de récupération 100 du matériau radioactif est illustré en référence conjointe aux figures 5A à 5D. Le procédé de récupération 100 est mis en oeuvre au moyen de l'appareil de récupération 1.

En référence à la figure 5A, le procédé de récupération 100 débute par une étape de déplacement 101 de l'outil de récupération, par l'intermédiaire du bras articulé et du système de commande 42 de l'organe de maintien 40, pour rapprocher l'outil de récupération 7 du matériau radioactif, puis pour aligner la tête de capture 30 avec le matériau radioactif 2 selon la direction d'actionnement Z-Z lors d'une étape de mise en regard 102 de l'outil de récupération 7 avec le matériau radioactif 2.

En référence à la figure 5B, le procédé de récupération 100 se poursuit par une étape d'ouverture 103 des godets 84 et de déploiement de la tête de capture 30 en regard du matériau radioactif 2, lorsque l'actionneur linéaire 90 sollicite le déplacement du corps mobile 80 selon la direction d'actionnement Z-Z. L'ouverture des godets 84, le déploiement de la tête de capture 30 selon la direction d'actionnement Z-Z et le déplacement du pion 47 le long de la rainure 45, sont progressifs au fur et à mesure que le corps mobile 80 se déplace le long de la direction d'actionnement Z-Z relativement au châssis 70 et que les bras 82 pivotent relativement au châssis 70 pour écarter les godets 84 l'un des l'autre.

Le déploiement de la tête de capture selon la direction d'actionnement Z-Z s'accompagne d'une étape de gonflage 104 de la tête de capture 30. Le gonfleur 96 remplit d'air le coussin 32 de la tête de capture, pour augmenter la pression à l'intérieur du coussin 32.

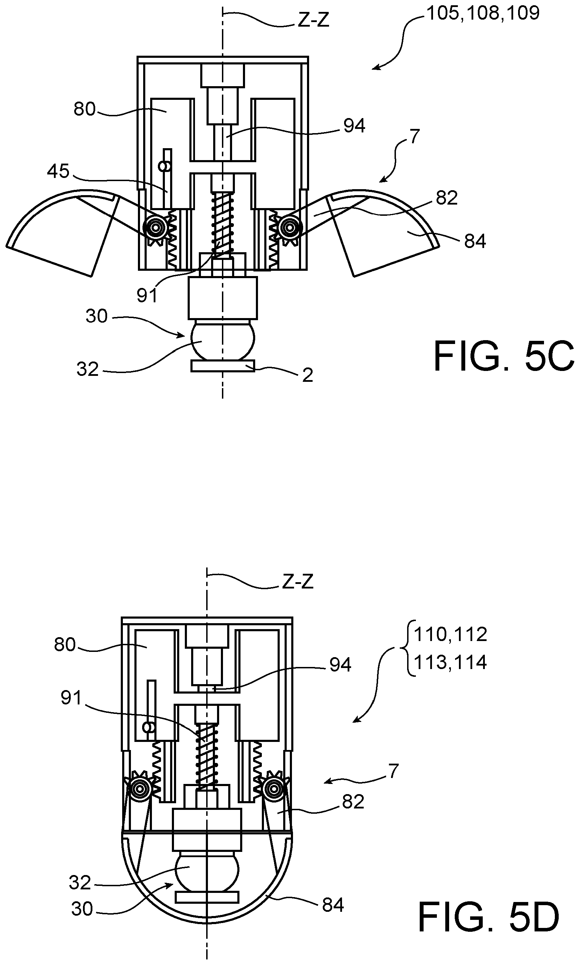

En référence à la figure 5C, le procédé de récupération 100 comprend une étape de rapprochement 105 de la tête de capture 30 du matériau radioactif 2 le long de la direction d'actionnement Z-Z, jusqu'à ce qu'à l'appui, selon l'étape 108, de la tête de capture 30 sur le matériau radioactif 2, ce qui facilite la capture.

L'appui de la tête de capture 30 sur le matériau radioactif 2 s'accompagne d'une étape de dépressurisation 109 de la tête de capture 30. Le gonfleur 96 vide d'air le coussin 32 de la tête de capture, pour diminuer la pression à l'intérieur du coussin 32 et pour qu'il aspire au moins partiellement le matériau radioactif 2, pour capturer et retenir plus facilement le matériau radioactif 2.

En référence à la figure 5D, le procédé de récupération 100 comprend une étape 110 de fermeture de chaque godet 84 et de rétractation de la tête de capture 30 vers l'enceinte 75. L'étape 110 est une étape comprenant la capture du matériau radioactif 2 qui reste attaché à la tête de capture 30. Le procédé de récupération 100 comprend une étape de rétention 112 du matériau radioactif 2 à l'intérieur de l'enceinte 75 qui est alors fermée par les godets 84, y compris lors d'une chute éventuelle du matériau radioactif 2 de la tête de capture 30 sur au moins un des godets 84.

Le cas échéant, le procédé de récupération 100 comprend une étape de vérification 113 dans laquelle il est vérifié que le matériau radioactif 2 est convenablement retenu à l'intérieur de l'enceinte 75, par exemple par l'intermédiaire du dispositif de contrôle 10 ou bien en secouant l'outil de récupération 7 et en surveillant que les godets 84 restent fermés. L'étape de vérification 113 vise à éviter que le matériau radioactif 2 soit libéré accidentellement, ce qui pourrait présenter un risque pour des opérateurs humains.

Le procédé de récupération 100 se termine avec une étape 114 de déplacement de l'outil de récupération 7 et de transport du matériau radioactif 2 vers un conteneur (non représenté) dans lequel le matériau radioactif 2 est isolé radiologiquement.

Grâce à l'outil de récupération 7, il est possible de capturer le matériau radioactif 2, de retenir le matériau radioactif 2 à l'intérieur de l'outil de récupération 7, tout en protégeant un opérateur contre les radiations. L'outil de récupération 7 est relativement peu lourd et peu encombrant. Il est décontaminable, fiable et facile d'utilisation. Il peut être commandé à distance, par exemple par télé opération, par l'intermédiaire de l'actionneur linéaire 90 et du gonfleur 96.

La tête de capture 30 gonflable et la dépression créée dans la tête de capture 30 permettent de capturer plus efficacement le matériau radioactif 2. La position rentrée est une position de sécurité de la tête de capture 30 vers laquelle elle tend en l'absence de commande de l'outil de récupération 7, ce qui permet de mieux retenir le matériau radioactif 2 à l'intérieur de l'enceinte 75 en cas d'incidents.

En étant démontable par rapport au châssis 70, la tête de capture 30 peut être remplacée facilement. L'outil de récupération 7 peut être équipé de têtes de capture 30 interchangeables, en particulier d'une tête de capture 30 particulièrement adaptée à chaque matériau radioactif 2 à capturer.

Bien entendu, diverses modifications peuvent être apportées par l'homme du métier à l'invention qui vient d'être décrite sans sortir du cadre de l'exposé de l'invention.

En variante, le fluide est un liquide, par exemple de l'eau. Le fluide peut aussi être un autre gaz que de l'air, par exemple un gaz inerte.

En variante, l'organe de maintien de l'outil de récupération 7 comprend par exemple une perche au lieu du bras articulé 40.

En variante, l'outil de récupération 7 est à usage unique et il est destiné à capturer au plus un matériau radioactif 2.

La structure de l'outil de récupération 7 peut varier, en particulier celle du châssis 70 et de l'équipage mobile 8. De manière générale, la forme du corps mobile 80 est adaptée à celle du châssis 70 pour être déplaçable relativement au châssis 70.

En variante, le corps mobile 80 peut être déplaçable relativement au châssis 70 avec une composante en rotation en plus de la composante en translation selon la direction d'actionnement Z-Z.

La structure du dispositif d'entrainement 20 peut varier. Le dispositif d'entrainement 20 peut comprendre autant de roues dentées 24 et de crémaillères 22 que de pattes 85 du corps mobile 80. En variante encore, au moins l'un des bras 82 comprend l'au moins une crémaillère 22 et au moins une des roues dentées est rigidement solidaire d'une des pattes 85 du corps mobile 80.

En variante, l'outil de récupération 7 est dépourvu de dispositif de guidage 44 du corps mobile 80.

La structure du dispositif de guidage 44 peut varier. Le nombre de rainures 45 et de pions 47 du dispositif de guidage 44 est par exemple variable. Le dispositif de guidage 44 peut comprendre autant de rainures 45 que de godets 84. De manière générale, le dispositif de guidage 44 comprend autant de pions 47 que de rainures 45. En variante encore, l'enveloppe 71 comprend au moins une rainure 45 et chaque pion 47 est rigidement solidaire du corps mobile 80.

En variante, les bras 82 sont raccordés mécaniquement au châssis plutôt qu'au corps mobile 80. Chacun des bras 82 est alors configuré pour pivoter par engagement mécanique du châssis 70 entre la position d'ouverture et la position de fermeture de chaque godet 84.

La structure des godets 84 peut varier. En particulier, ils peuvent être de formes différentes les uns des autres, notamment de formes complémentaires pour fermer l'enceinte 75 lorsqu'ils sont en position de fermeture.

Le nombre de godets 84 de l'outil de récupération 7 est variable, par exemple l'outil de récupération 7 peut comprendre un seul godet 84 ou au moins trois godets 84.

En variante, au moins un des godets 84 peut être déplaçable relativement au châssis 70 avec une composante en translation en plus de la composante en rotation relativement au châssis 70.

La structure de l'actionneur linéaire 90 peut varier. Par exemple, l'actionneur linéaire 90 peut comprendre un ressort, un actionneur hydraulique et/ou un actionneur électrique.

La structure de l'organe élastique de rappel 91 peut varier. En variante, l'organe élastique de rappel 91 comprend un ressort à lames ou un bloc de matériau déformable élastiquement tel qu'un élastomère.

En variante, l'enceinte 75 est délimitée par le châssis 70, notamment par l'enveloppe 71. Dans ce cas, la tête de capture 30 est entièrement logée dans le châssis 70 lorsqu'elle est en position rentrée.

En variante, l'outil de récupération 7 est dépourvu de gonfleur 96, notamment lorsque la tête de capture 30 n'est pas alimentée en fluide.

La structure de la tête de capture 30 peut varier : par exemple, la tête de capture 30 comprend un embout d'aspiration au lieu du coussin 32.

En variante, la tête de capture 30 est raccordée de manière démontable au châssis 70 par d'autres types d'attaches telles que des goupilles. En variante encore, la tête de capture 30 est raccordée de manière non démontable au châssis 70, par exemple par sertissage.

En variante, le dispositif de contrôle de récupération 10 comprend un dispositif de capture d'images qui est situé à l'extérieur de l'outil de récupération 7, par exemple fixé à l'extérieur du châssis 70.

L'ordre des étapes du procédé de récupération 100 peut varier. En particulier, l'étape d'ouverture 103 des godets peut avoir lieu avant que l'outil de récupération 7 soit en regard du matériau radioactif 2. La tête de capture 30 peut être au moins partiellement gonflée avant l'étape d'ouverture 103 des godets.

Le procédé de récupération 100 peut être dépourvu d'étape d'appui 108 de la tête de capture 30, notamment lorsque la dépression créée dans la tête de capture 30 à l'étape de dépressurisation 109 suffit à capturer le matériau radioactif 2.

L'étape 113 de vérification de la rétention du matériau radioactif peut être omise, notamment lorsque l'outil de récupération 7 a déjà récupéré un matériau radioactif 2 similaire.

## Revendications

1. Outil de récupération (7) d'un élément solide, notamment un matériau radioactif (2), comprenant :
un châssis (70),
une tête de capture (30) mobile par rapport au châssis (70) entre une position rentrée dans laquelle la tête de capture (30) est logée à l'intérieur d'une enceinte (75) de l'outil de récupération (7), et une position déployée pour capturer l'élément solide (2),
au moins un godet (84) mobile par rapport au châssis (70) entre une position d'ouverture et une position de fermeture, la tête de capture (30) étant en position déployée lorsque le godet (84) est en position d'ouverture, le godet (84) étant en position d'ouverture lorsque la tête de capture (30) est en position déployée,
**caractérisé en ce que** la tête de capture (30) est en position rentrée pour retenir l'élément solide (2) à l'intérieur de l'enceinte (75) lorsque le godet (84) est en position de fermeture, le godet (84) étant en position de fermeture lorsque la tête de capture (30) est en position rentrée,
la tête de capture (30) comprenant un coussin (32) qui est gonflable par un fluide, la tête de capture (30) étant configurée pour retenir l'élément solide (2) relativement au châssis (70) au moins partiellement par aspiration en vidant au moins partiellement le coussin (32) de fluide.

2. Outil de récupération (7) selon l'une quelconque des revendications précédentes, dans lequel le godet (84) mobile est un premier godet (84),
l'outil de récupération (7) comprenant un deuxième godet (84) mobile entre une position d'ouverture pour le déploiement de la tête de capture (30), et une position de fermeture dans laquelle la tête de capture (30) est en position rentrée pour retenir l'élément solide (2) à l'intérieur de l'enceinte (75),
le deuxième godet (84) étant préférablement de structure sensiblement identique à celle du premier godet (84),
le deuxième godet (84) étant très préférablement configuré pour avoir une position symétrique de la position du premier godet (84) par rapport à un plan de symétrie passant par la tête de capture (30), lors de l'ouverture et/ou de la fermeture des godets (84).

3. Outil de récupération (7) selon l'une quelconque des revendications précédentes, dans lequel chaque godet (84) est configuré pour rester en position de fermeture lors d'un impact de l'élément solide (2) sur ce godet (84) lorsque la tête de capture (30) est en position rentrée, notamment en cas de chute de l'élément solide (2) par perte accidentelle du maintien de l'élément solide (2) par la tête de capture (30).

4. Outil de récupération (7) selon l'une quelconque des revendications précédentes, comprenant un organe élastique de rappel (91) qui est configuré pour solliciter élastiquement la tête de capture (30) vers la position rentrée,
l'organe élastique de rappel (91) comprenant préférablement un ressort de traction, le ressort de traction étant très préférablement un ressort hélicoïdal.

5. Outil de récupération (7) selon l'une quelconque des revendications précédentes, dans lequel le châssis (70) comprend préférablement une enveloppe (71), l'outil de récupération (7) comprenant un corps mobile (80) qui est distinct de la tête de capture (30) et qui est mobile en translation relativement au châssis (70).

6. Outil de récupération (7) selon la revendication précédente dépendant de la revendication 5, dans lequel le corps mobile (80) comprend un socle (83) et au moins deux pattes (85) chacune en saillie depuis le socle (83),
chaque patte (85) étant configurée pour engager mécaniquement un bras (82) de godet (84) pour déplacer ce godet (84) relativement au châssis (70), très préférablement par l'engagement mécanique d'une crémaillère (22) et d'une roue dentée (24).

7. Outil de récupération (7) selon l'une quelconque des revendications précédentes, comprenant un dispositif de guidage (44), préférablement en translation, du corps mobile (80) relativement au châssis (70),
le dispositif de guidage (44) comprenant préférablement une rainure (45) qui est configurée pour engager mécaniquement un pion (47) qui est logé dans la rainure (45).

8. Outil de récupération (7) selon l'une quelconque des revendications précédentes, comprenant un actionneur linéaire (90) pour déplacer la tête de capture (30) relativement au châssis (70) entre la position rentrée et la position déployée,
l'actionneur linéaire (90) comprenant préférablement un vérin, l'actionneur linéaire (90) comprenant préférablement un actionneur pneumatique.

9. Outil de récupération (7) selon l'une quelconque des revendications précédentes, comprenant un gonfleur (96) qui est raccordé fluidiquement à la tête de capture (30) pour la gonfler en la remplissant au moins partiellement de fluide et/ou pour la dégonfler en la vidant au moins partiellement de fluide.

10. Outil de récupération (7) selon l'une quelconque des revendications précédentes, dans lequel le coussin (32) est réalisé dans un matériau comprenant un élastomère tel qu'un silicone ou un latex.

11. Appareil de récupération (1) d'élément solide, notamment un matériau radioactif (2), comprenant un outil de récupération (7) selon l'une quelconque des revendications précédentes,
l'appareil de récupération (1) comprenant en outre un système de commande (4) de l'outil de récupération (7) et/ou un organe de maintien (40) de l'outil de récupération (7).

12. Appareil de récupération (1) selon la revendication précédente, comprenant un dispositif de contrôle de récupération (10) pour contrôler la récupération de l'élément solide (2) par l'outil de récupération (7),
le dispositif de contrôle de récupération (10) comprenant préférablement un dispositif de capture d'images, le dispositif de capture d'images étant très préférablement logé à l'intérieur de l'enceinte (75) au moins lorsque le godet (84) est en position de fermeture.

13. Procédé de récupération d'un élément solide, notamment un matériau radioactif (2), au moyen d'un outil de récupération (7) selon l'une quelconque des revendications 1 à 10 ou d'un appareil de récupération (1) selon l'une quelconque des revendications 11 à 12, comprenant :
une étape de capture (110) de l'élément solide (2), comprenant une dépressurisation (109) de la tête de capture (30) pour retenir l'élément solide (2) relativement à la tête de capture (30), le déplacement de la tête de capture (30) de sa position déployée vers sa position rentrée, et la fermeture de l'au moins un godet (84) pour retenir l'élément solide (2) à l'intérieur de l'enceinte (75) de l'outil de récupération (7).

14. Procédé de récupération selon la revendication précédente, comprenant une étape d'ouverture (103) de l'au moins un godet (84) et de déploiement de la tête de capture (30), notamment en regard de l'élément solide (2), et préférablement de gonflage (104) de la tête de capture (30) en la remplissant au moins partiellement de fluide, avant l'étape de capture (110) de l'élément solide (2).

15. Procédé de récupération selon l'une quelconque des revendications précédentes 13 et 14, dans lequel l'étape de capture (110) comprend l'appui de la tête de capture (30) sur l'élément solide (2), et préférablement la dépressurisation (109) de la tête de capture (30) en la vidant au moins partiellement de fluide.

## Patentansprüche

1. Werkzeug zur Rückgewinnung (7) eines festen Elements, insbesondere eines radioaktiven Materials (2), umfassend:
Ein Gehäuse (70),
einen Erfassungskopf (30), der beweglich ist bezüglich des Gehäuses (70) zwischen einer eingefahrenen Position, in der der Erfassungskopf (30) im Innern eines Behälters (75) des Rückgewinnungswerkzeugs (7) untergebracht ist, und einer ausgefahrenen Position zum Erfassen des festen Elements (2),
mindestens einen Becher (84), der beweglich ist bezüglich des Gehäuses (70) zwischen einer Öffnungsposition und einer Schließposition, wobei sich der Erfassungskopf (30) in der ausgefahrenen Position befindet, wenn sich der Becher (84) in der Öffnungsposition befindet, und sich der Becher (84) in der Öffnungsposition befindet, wenn sich der Erfassungskopf (30) in der ausgefahrenen Position befindet,
**dadurch gekennzeichnet, dass** sich der Erfassungskopf (30) in der eingefahrenen Position befindet, um das feste Element (2) im Innern des Behälters (75) zurückzuhalten, wenn sich der Becher (84) in der Schließposition befindet, wobei sich der Becher (84) in der Schließposition befindet, wenn sich der Erfassungskopf (30) in der eingefahrenen Position befindet,
wobei der Erfassungskopf (30) ein Kissen (32) umfasst, das durch eine Flüssigkeit aufpumpbar ist, wobei der Erfassungskopf (30) konfiguriert ist, um das feste Element (2) relativ zum Gehäuse (70) mindestens teilweise durch Saugen zurückzuhalten, indem das Flüssigkeitskissen (32) mindestens teilweise entleert wird.

2. Rückgewinnungswerkzeug (7) nach einem der vorhergehenden Ansprüche, wobei der bewegliche Becher (84) ein erster Becher (84) ist,
wobei das Rückgewinnungswerkzeug (7) einen zweiten Becher (84) umfasst, der beweglich ist zwischen einer Öffnungsposition zum Ausfahren des Erfassungskopfes (30) und einer Schließposition, in der sich der Erfassungskopf (30) in der eingefahrenen Position befindet, um das feste Element (2) im Innern des Behälters (75) zurückzuhalten,
wobei der zweite Becher (84) vorzugsweise eine Struktur aufweist, die im Wesentlichen identisch ist mit dem ersten Becher (84),
wobei der zweite Becher (84) bevorzugterweise so konfiguriert ist, dass er eine symmetrische Position der Position des ersten Bechers (84) aufweist, bezüglich einer Symmetrieebene, die durch den Erfassungskopf (30) verläuft, beim Öffnen und/oder Schließen der Becher (84).

3. Rückgewinnungswerkzeug (7) nach einem der vorhergehenden Ansprüche, wobei jeder Becher (84) konfiguriert ist, um in der Schließposition zu bleiben, wenn das feste Element (2) auf diesen Becher (84) trifft, wenn sich der Erfassungskopf (30) in der eingefahrenen Position befindet, insbesondere im Falle des Herunterfallens des festen Elements (2) durch versehentlichen Verlust des Halts des festen Elements (2) durch den Erfassungskopf (30).

4. Rückgewinnungswerkzeug (7) nach einem der vorhergehenden Ansprüche, ein elastisches Rückstellungsorgan (91) umfassend, das konfiguriert ist, um den Erfassungskopf (30) elastisch in die Richtung der eingefahrenen Position zu drängen,
wobei das elastische Rückstellungsorgan (91) vorzugsweise eine Zugfeder umfasst, wobei die Zugfeder bevorzugterweise eine Schraubenfeder ist.

5. Rückgewinnungswerkzeug (7) nach einem der vorhergehenden Ansprüche, wobei das Gehäuse (70) vorzugsweise eine Hülle (71) umfasst, wobei das Rückgewinnungswerkzeug (7) einen beweglichen Körper (80) umfasst, der separat ist vom Erfassungskopf (30) und der relativ zum Gehäuse (70) translatorisch bewegbar ist.

6. Rückgewinnungswerkzeug (7) nach dem vorhergehenden Anspruch in Abhängigkeit von Anspruch 5, wobei der bewegliche Körper (80) einen Sockel (83) und mindestens zwei Laschen (85) umfasst, die jeweils aus dem Sockel (83) herausragen,
wobei jede Lasche (85) konfiguriert ist, um mechanisch mit einem Arm (82) des Bechers (84) in Eingriff zu kommen, um diesen Becher (84) relativ zum Gehäuse (70) zu verschieben, bevorzugterweise durch den mechanischen Eingriff einer Zahnstange (22) und eines Zahnrads (24).

7. Rückgewinnungswerkzeug (7) nach einem der vorhergehenden Ansprüche, eine Vorrichtung zur Führung (44) umfassend, vorzugsweise translatorisch, des beweglichen Körpers (80) relativ zum Gehäuse (70),
wobei die Führungsvorrichtung (44) vorzugsweise eine Nut (45) umfasst, die konfiguriert ist, um mechanisch mit einem Stift (47) einzugreifen, der in der Nut (45) untergebracht ist.

8. Rückgewinnungswerkzeug (7) nach einem der vorhergehenden Ansprüche, einen linearen Aktuator (90) umfassend zum Verschieben des Erfassungskopfes (30) relativ zum Gehäuse (70), zwischen der eingefahrenen Position und der ausgefahrenen Position,
wobei der lineare Aktuator (90) vorzugsweise einen Zylinder umfasst, wobei der lineare Aktuator (90) vorzugsweise einen pneumatischen Aktuator umfasst.

9. Rückgewinnungswerkzeug (7) nach einem der vorhergehenden Ansprüche, einen Aufpumper (96) umfassend, der fluidisch mit dem Erfassungskopf (30) verbunden ist, um ihn aufzupumpen, indem er mindestens teilweise mit Flüssigkeit gefüllt wird und/oder entleert wird, indem die Flüssigkeit mindestens teilweise abgelassen wird.

10. Rückgewinnungswerkzeug (7) nach einem der vorhergehenden Ansprüche, wobei das Kissen (32) aus einem Material besteht, das ein Elastomer wie Silikon oder Latex umfasst.

11. Gerät zur Rückgewinnung (1) eines festen Elements, insbesondere eines radioaktiven Materials (2), ein Rückgewinnungswerkzeug (7) nach einem der vorhergehenden Ansprüche umfassend,
wobei das Rückgewinnungsgerät (1) ferner ein System zur Steuerung (4) des Rückgewinnungswerkzeugs (7) umfasst und/oder ein Halteorgan (40) des Rückgewinnungswerkzeugs (7).

12. Rückgewinnungsgerät (1) nach dem vorhergehenden Anspruch, eine Rückgewinnungskontrollvorrichtung (10) zur Kontrolle der Rückgewinnung des festen Elements (2) durch das Rückgewinnungswerkzeug (7) umfassend,
wobei die Rückgewinnungskontrollvorrichtung (10) vorzugsweise eine Bilderfassungsvorrichtung umfasst, wobei die Bilderfassungsvorrichtung bevorzugterweise im Innern des Behälters (75) untergebracht ist, mindestens dann, wenn sich der Becher (84) in der Schließposition befindet.

13. Verfahren zur Rückgewinnung eines festen Elements, insbesondere eines radioaktiven Materials (2), mittels eines Rückgewinnungswerkzeugs (7) nach einem der Ansprüche 1 bis 10 oder eines Rückgewinnungsgeräts (1) nach einem der Ansprüche 11 bis 12, umfassend:
einen Schritt zum Erfassen (110) des festen Elements (2), eine Druckentlastung (109) des Erfassungskopfes (30) umfassend, um das feste Element (2) relativ zum Erfassungskopf (30) zurückzuhalten, das Verschieben des Erfassungskopfes (30) von seiner ausgefahrenen Position in seine eingefahrene Position, und das Schließen des mindestens einen Bechers (84), um das feste Element (2) im Innern des Behälters (75) des Rückgewinnungswerkzeugs (7) zurückzuhalten.

14. Rückgewinnungsverfahren nach dem vorhergehenden Anspruch, einen Schritt des Öffnens (103) des mindestens einen Bechers (84) und des Ausfahrens des Erfassungskopfes (30) umfassend, insbesondere dem festen Element (2) zugewandt, und vorzugsweise des Aufpumpens (104) des Erfassungskopfes (30), indem er mindestens teilweise mit Flüssigkeit gefüllt wird, vor dem Schritt des Erfassens (110) des festen Elements (2).

15. Rückgewinnungsverfahren nach einem der vorhergehenden Ansprüche 13 und 14, wobei der Erfassungsschritt (110) das Abstützen des Erfassungskopfes (30) auf das feste Element (2) umfasst, und vorzugsweise die Druckentlastung (109) des Erfassungskopfes (30), indem mindestens teilweise die Flüssigkeit abgelassen wird.

## Claims

1. A recovery tool (7) for recovering a solid element, especially a radioactive material (2), comprising:
a chassis (70),
a capture head (30) which is movable relative to the chassis (70) between a retracted position in which the capture head (30) is housed inside an enclosure (75) of the recovery tool (7), and an extended position for capturing the solid element (2),
at least one bucket (84) which is movable relative to the chassis (70) between an opening position and a closing position, wherein the capture head (30) is in an extended position when the bucket (84) is in the opening position, wherein the bucket (84) is in an opening position when the capture head (30) is in the extended position,
**characterized in that** the capture head (30) is in the retracted position to retain the solid element (2) inside the enclosure (75) when the bucket (84) is in the closing position, wherein the bucket (84) is in the closing position when the capture head (30) is in the retracted position,
wherein the capture head (30) comprises a cushion (32) which is inflatable by a fluid, wherein the capture head (30) is configured to retain the solid member (2) relative to the chassis (70) at least partially by suction by at least partially emptying the cushion (32) of fluid.

2. The recovery tool (7) according to the preceding claim, wherein the movable bucket (84) is a first bucket (84),
wherein the recovery tool (7) comprises a second bucket (84) movable between an opening position for extending the capture head (30), and a closing position in which the capture head (30) is in a retracted position to retain the solid element (2) inside the enclosure (75),
wherein the second bucket (84) is preferably substantially identical in structure to the first bucket (84),
wherein the second bucket (84) is highly preferably configured to have a position symmetrical to the position of the first bucket (84) with respect to a plane of symmetry passing through the capture head (30), when opening and/or closing the buckets (84).

3. The recovery tool (7) according to any of the preceding claims, wherein each bucket (84) is configured to remain in the closing position when the solid element (2) impacts this bucket (84) when the capture head (30) is in the retracted position, especially in the event of a fall of the solid element (2) due to the accidental loss of holding for the solid element (2) by the capture head (30).

4. The recovery tool (7) according to any of the preceding claims, comprising an elastic return member (91) which is configured to elastically bias the capture head (30) towards the retracted position,
wherein the elastic return member (91) preferably comprises a tension spring, wherein the tension spring is highly preferably a coil spring.

5. The recovery tool (7) according to any of the preceding claims, wherein the chassis (70) preferably comprises a casing (71), wherein the recovery tool (7) comprises a movable body (80) which is distinct from the capture head (30) and which is translationally movable relative to the chassis (70).

6. The recovery tool (7) according to the preceding claim when dependent on claim 5, wherein the movable body (80) comprises a mount (83) and at least two legs (85) each projecting from the mount (83),
wherein each leg (85) is configured to mechanically engage an arm (82) of a bucket (84) to move this bucket (84) relative to the chassis (70), highly preferably by mechanically engaging a rack (22) and a toothed wheel (24).

7. The recovery tool (7) according to any of the preceding claims, comprising a guide device (44), for preferably translationally guiding the movable body (80) relative to the chassis (70),
wherein the guide device (44) preferably comprises a groove (45) which is configured to mechanically engage a pin (47) which is housed in the groove (45).

8. The recovery tool (7) according to any of the preceding claims, comprising a linear actuator (90) to move the capture head (30) relative to the chassis (70) between the retracted position and the extended position,
wherein the linear actuator (90) preferably comprises a cylinder, wherein the linear actuator (90) preferably comprises a pneumatic actuator.

9. The recovery tool (7) according to any of the preceding claims, comprising an inflator (96) which is fluidly connected to the capture head (30) for inflating it by at least partially filling it with fluid and/or for deflating it by at least partially emptying it of fluid.

10. The recovery tool (7) according to any of the preceding claims, wherein the cushion (32) is made of a material comprising an elastomer such as a silicone or latex.

11. A recovery apparatus (1) for recovering a solid element, especially a radioactive material (2), comprising a recovery tool (7) according to any of the preceding claims,
wherein the recovery apparatus (1) further comprises a control system (4) for controlling the recovery tool (7) and/or a holding member (40) for holding the recovery tool (7).

12. The recovery apparatus (1) according to the preceding claim, comprising a recovery monitoring device (10) for monitoring the recovery of the solid element (2) by the recovery tool (7),
wherein the recovery monitoring device (10) preferably comprises an image capture device, wherein the image capture device is highly preferably housed inside the enclosure (75) at least when the bucket (84) is in the closing position.

13. A method for recovering a solid element, especially a radioactive material (2), by means of a recovery tool (7) according to any of claims 1 to 10 or a recovery apparatus (1) according to any of claims 11 to 12, comprising:
a step of capturing (110) the solid element (2), comprising depressurising (109) the capture head (30) to retain the solid element (2) relative to the capture head (30), moving the capture head (30) from its extended position to its retracted position, and closing the at least one bucket (84) to retain the solid element (2) inside the enclosure (75) of the recovery tool (7).

14. The recovery method according to the preceding claim, comprising a step of opening (103) the at least one bucket (84) and extending the capture head (30), especially facing the solid element (2), and preferably inflating (104) the capture head (30) by filling it at least partially with fluid, before the step of capturing (110) the solid element (2).

15. The recovery method according to any of the preceding claims 13 and 14, wherein the capture step (110) comprises pressing the capture head (30) onto the solid element (2), and preferably depressurising (109) the capture head (30) by emptying it at least partially of fluid.
